Europäisches Patentamt

European Patent Office

Office européen des brevets

(11) Publication number: **0 052 497**
**A2**

(12) **EUROPEAN PATENT APPLICATION**

(21) Application number: **81305401.2**

(22) Date of filing: **16.11.81**

(51) Int. Cl.³: **A 61 C 3/16**

(30) Priority: **15.11.80 GB 8036744**

(43) Date of publication of application:
**26.05.82 Bulletin 82/21**

(84) Designated Contracting States:
**AT CH DE FR GB LI SE**

(71) Applicant: **Messing, Jack Joseph**
**28 Dobree Avenue**
**London, NW10(GB)**

(72) Inventor: **Messing, Jack Joseph**
**28 Dobree Avenue**
**London, NW10(GB)**

(54) **An instrument for removing permanently cemented full veneer dental crowns from posterior teeth.**

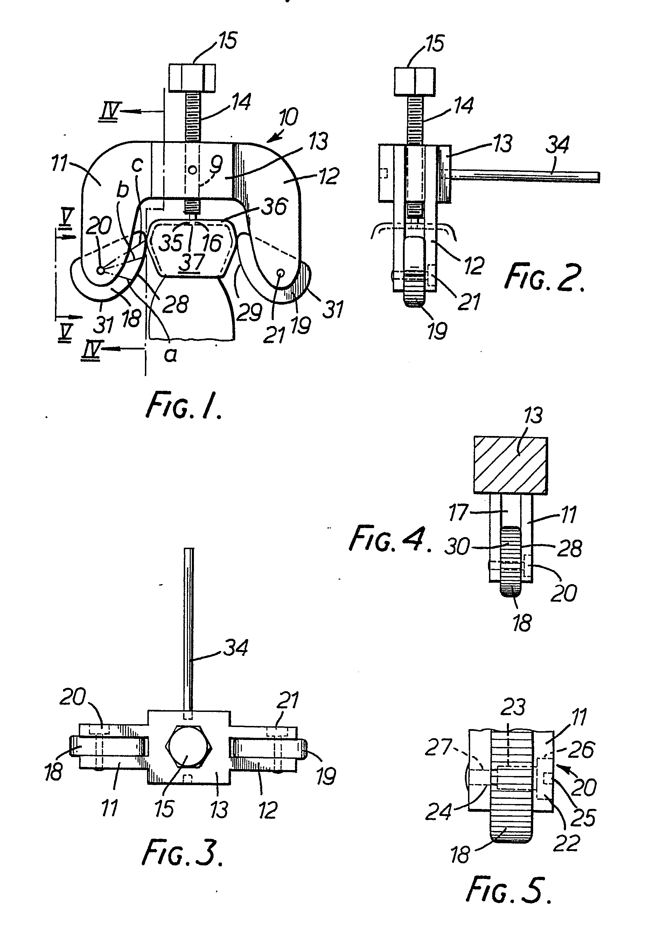

(57) The instrument comprises a U-shaped yoke (10) for straddling the buccal and lingual surfaces of a crown (36), an operating screw (14) co-operating with the threaded bore (9) formed in the central portion (13) of the yoke. The limbs (11,12) of the U-shaped yoke are bifurcated and between each bifurcated limb, crown engaging members (18,19) are mounted on pivots (20,21). The crown engaging members are formed with frictional crown engaging surfaces (28,29) of progressively increasing radius as indicated by lines (a,b,c). In operation, a hole (35) is drilled in the centre of the crown (36). The instrument is placed in the position shown in Figure 1 and the operating screw (14) is rotated to cause the end (16) to pass through the hole (35) and engage the tooth (37). Further torque applied to the screw (14) causes the surfaces (28,29) to lock against the crown at the same time as causing the yoke to move upwards thus removing the crown from the tooth.

FIG. 1.

" AN INSTRUMENT FOR REMOVING PERMANENTLY CEMENTED
FULL VENEER DENTAL CROWNS FROM POSTERIOR TEETH"

The invention relates to an instrument for removing permanently
cemented full veneer dental crowns from posterior teeth
comprising a yoke for straddling the buccal and lingual
surfaces of a crown, an operating screw for threaded engagement
in threaded bore means secured to or integral with a central
portion of the yoke for engaging the upper surface of a tooth through
a pre-drilled hole in the crown, and first and second frictional
crown engaging surfaces, at least one of said frictional surfaces
being formed on a crown engaging member which is pivotable on
· the yoke.

An instrument for removing permanently cemented full veneer
dental crowns from posterior teeth of the above type is known
in which the first and second frictional crown engaging surfaces
are in the form of a pair of claws for seating in the undercut
of the tooth. The pivot axes of the crown engaging members are
disposed intermediate the ends of the crown engaging members.
The claws are formed at one end of the crown engaging members
and the other ends of the crown engaging members are engaged by
a lock nut co-operating with a threaded portion of the operating
screw.

With a crown removing instrument of this kind, the procedure
has the complication of requiring two adjustment steps. The first adjustment step is to rotate the lock nut using a bur inserted in one of a series of holes formed in the lock nut. This rotation of the lock nut causes the jaws to seat with pressure in the undercut. 'The second adjustment step is to rotate the operating screw to cause the crown to separate from the tooth.

The invention as claimed is intended to remedy the drawback of a relatively complicated and expensive mechanism.

The chief advantages offered by the invention are simplicity and ease of operation. The need for a lock nut operating mechanism is eliminated and the instrument is actuated simply by applying torque to the operating screw.

One way of carrying out the invention is described in detail below with reference to the accompanying drawings which illustrate only one specific embodiment, in which:-

Figure 1 is a front elevation of a crown removing instrument positioned on a permanent crown which is required to be removed;

Figure 2, is a side elevation of the instrument of Figure 1;

Figure 3 is a plan view of the instrument of Figure1;

Figure 4 is a sectional elevation of part of the instrument, on the line IV - IV in Figure 1, and

Figure 5 is a side elevation of part of the instrument, on the Line V - V in Figure 1, to an enlarged scale.

Referring now to Figures 1-5, the instrument comprises a
generally U-shaped yoke 10 formed with limbs 11 and 12. Mounted
in a threaded bore 9 in a central boss 13 of the yoke 10 is an
operating screw 14 having a hexagonal head 15 and a plain
cylindrical end 16 of smaller diameter than the thread diameter
of the screw. Each of the limbs 11 and 12 of the U-shaped yoke
10 is formed with a slot 17 so that each limb has a bifurcated
form.

Cam-shaped stainless steel crown engaging members 18 and 19
are pivotally mounted within and at the free ends of the bifurcated
limbs 11 and 12 respectively on pivot pins 20 and 21 disposed
equidistantly from the axis of the operating screw. The pivot
pins 20 and 21 extend through the associated bifurcated limbs
11 and 12 respectively and (as best seen in Figure 5) each
pivot pin comprises a head 22, a plain cylindrical shank 23
providing the actual pivot for the associated crown engaging
member, and a threaded part 24 of smaller diameter at the end
remote from the head 22. The pivot head 22 is formed with a
screw-driver slot 25 and seats in a recess 26 formed in one
half of the bifurcated limb 11, the outer portion of the pivot
head 22 being flush with the surface of the bifurcated limb 11.
The threaded part 24 of the pivot pin 20 engages an internally
threaded bore 27 in the other half of the bifurcated limb 11
and the free end of the threaded part 24 is splayed or riveted
lightly over the surface of the limb so as to retain the pivot
pin on the limb whilst not impairing the ability of the pivot pin to be tightened on the limb by applying a screw-driver to the slot 25.

The crown engaging members 18 and 19 are formed with curved frictional crown engaging surfaces 28 and 29 respectively provided with laterally extending serrations 30. The serrations 30 have sharp edges to promote effective frictional engagement with the surfaces of the crown. The curved surfaces 28 and 29 of the cam-shaped members 18 and 19 are shaped so as to provide increasing radii from the pivot pins 20 and 21 as indicated by the broken lines a,b, and c, on the cam-shaped member 18, Figure 1. The portion of each cam-shaped member 18,19 on the side of the pivot pin remote from the crown engaging surface is provided with a circular surface 31 projecting clear of the extremity of the limb 11 to enable the cam-shaped member to be readily rotated with the fingers.

The cam-shaped members 18 and 19 are an easy friction fit within the bifurcated limbs 11 and 12 so that they can be readily rotated with the fingers to any desired angle. The boss 13 of the yoke 10 is formed with threaded re-entrant bores 32 and 33 disposed on opposite sides thereof and offset from the centre of the boss 13. An elongated spindle 34 can be screwed into either of the threaded bores 32 and 33 to provide an aid in holding and manipulating the device.

In operation, a hole 35 is drilled through approximately the centre of the occlusal surface of the crown 36 until the underlying dentine or core structure of the tooth 37 is exposed. The crown removing instrument is positioned as shown in Figure 1 with the yoke 10 straddling the buccal and lingual surfaces of the crown. The cam-shaped crown engaging members 18 and 19 are rotated inwardly with the fingers so that the crown engaging surfaces 28 and 29 engage the crown 36 level with or below the bulbous portions 38 of the buccal and lingual surfaces of the crown with light pressure. The operating screw 14 is now rotated by applying a ratchet wrench to the hexagonal head 15 so that the end advances through the hole 35 in the crown 36 and engages the exposed dentine or core structure.

As a consequence of the progressively increasing radii of points along the curved crown engaging surfaces 28 and 29 with respect to the pivots 20 and 21, the frictional engagement between the crown engaging surfaces 28 and 29 and the buccal and lingual surfaces of the crown 36 will ensure that when further torque is applied to the operating screw 14 by the ratchet wrench the cam-shaped members 18 and 19 will pivot inwardly to lock the yoke firmly to the crown. Further rotation of the operating screw 14 by the ratchet wrench will now tend to cause the yoke and crown as a unit to draw away from the tooth. The forces generated are sufficient in most cases to shatter the cement so that the crown becomes separated from the tooth.

During the operation of the crown removing instrument, the instrument is partly held by the elongated spindle 34 to minimise or eliminate any possiblity of the instrument falling into the

patient's mouth.

Repeated use of the instrument may lead to the cam-shaped members 18 and 19 rotating freely within the bifurcated limbs 11 and 12 so that the initial setting of the cam-shaped members against the buccal and lingual surfaces of the crown is made more difficult. This can easily be corrected by applying a screw-driver to the slot 25 in the pivot pin head 22 so as to tighten the bifurcated limb 11 on to the associated cam-shaped member 18.

In another embodiment of the invention the device includes only one cam-shaped crown engaging member. The opposite limb of the U-shaped yoke 10 is provided with a fixed curved frictional crown engaging surface.

In another embodiment of the invention, the limbs 11 and 12 are not bifurcated. The pivot pins 20 and 21 are mounted in journal bearings carried by the limbs 11 and 12.

The crown remover described above may be used to remove a discrete crown as described herein or a crown in the form of a bridge retainer. It will be apparent that the removal of the crown can be performed simply, easily and with safety.

CLAIMS :

1. An instrument for removing permanently cemented full veneer dental crowns from posterior teeth comprising a yoke (10) for straddling the buccal and lingual surfaces of a crown (36), an operating screw (14) for threaded engagement in threaded bore means secured to or integral with a central portion of the yoke for engaging the upper surface of a tooth (37) through a pre-drilled hole (35) in the crown, first and second frictional crown engaging surfaces (28, 29), at least one of said frictional surfaces being formed on a crown engaging member (18,19) which is pivotable on the yoke, characterised in that the frictional surface on said crown engaging member is formed along its length at progressively increasing radii (a,b,c) from the pivot axis (20,21) whereby the frictional engagement between the crown engaging surfaces and the buccal and lingual surfaces of the crown will tend to cause the crown engaging member or members to pivot inwardly to lock the yoke firmly to the crown when torque is applied to the operating screw to move the yoke away from the tooth.

2. An instrument for removing permanently cemented full veneer dental crowns according to Claim 1, characterised in that the yoke is generally U-shaped and the first and second frictional crown engaging surfaces (28,29) are formed respectively on first and second crown/engaging members (18, 19) which are pivoted at the free ends of the limbs of the U-shaped yoke equidistantly from the axis of the operating screw.

3. An instrument for removing permanently cemented full veneer dental crowns according to Claim 2, characterised in that each limb is bifurcated and the crown engaging members are pivoted within the bifurcated limbs on pivot pins (20,21) which extend through the limbs.

4. An instrument for removing permanently cemented full veneer dental crowns according to Claim 3, characterised in that each pivot pin has a head (22) engaging in a recess (26) in one half of the bifurcated limb and a threaded end (24) engaging in a threaded bore (27) in the other half of the bifurcated limb, the pivot head having means (25) for adjustment by a hand tool.

5. An instrument for removing permanently cemented full veneer dental crowns according to Claim 4, characterised in that the threaded end of the pivot pin is splayed over the limb to retain the pivot pin on the limb.

6. An instrument for removing permanently cemented full veneer dental crowns according to any preceding Claim, characterised in that the operating screw has a plain cylindrical tooth engaging end of smaller diameter than the diameter of the threaded part of the screw.

7. An instrument for removing permanently cemented full veneer dental crowns according to any preceding Claim, characterised in that the frictional crown engaging surface on the or each crown engaging member is formed with lateral serrations (30) to promote frictional engagement with the crown.

0052497

1/1

FIG. 1.

FIG. 2.

FIG. 3.

FIG. 4.

FIG. 5.